# EUROPEAN PATENT SPECIFICATION

(11) **EP 4 681 913 B1**
(45) Date of publication and mention of the grant of the patent: **07.10.2026**
(21) Application number: 25186908.7
(22) Date of filing: 02.07.2025
(51) Int. Cl.: B32B 5/02, B32B 5/26, B32B 7/09, D04H 1/43, D04H 1/435, D04H 1/46

(54) **FLAME-RESISTANT ROOFING UNDERLAYMENT AND SUPPORT LAYER THEREOF**
FLAMMHEMMENDE DACHUNTERDECKE UND TRÄGERSCHICHT DAFÜR
SOUS-COUCHE DE TOITURE RÉSISTANTE À LA FLAMME ET COUCHE DE SUPPORT ASSOCIÉE

(30) Priority: 18.07.2024 US 202418776421; 30.10.2024 EP 24209882
(43) Date of publication of application: 21.01.2026
(73) Proprietor: Freudenberg Performance Materials S.a.s. di Externa Holding S.r.l., 22060 Novedrate (CO) (IT)
(72) Inventor: Gianmarco, Galliani, 20132 Milano (IT); Assumma, Luca, Macon, 31210 (US); Rocchetta, Luigi, 26822 Brembio (IT); Ellmer, Katharina, 20900 Monza (IT); Williamson, Brannon, Forsyth, 31029 (US); Pallini, Federico, 20135 Milano (IT)
(74) Representative: Steiert, Nico

(56) References cited:
- US-A1- 2018 100 256
- US-A1- 2022 316 212

## Description

### FIELD

The invention relates to construction materials, especially roofing underlayment and support layers for roofing underlayment, comprising a first nonwoven layer comprising polyester fibers, and a second nonwoven layer comprising organic flame-resistant fibers.

### BACKGROUND

Roofing underlayment is a sheet material which is installed between primary roofing materials. The underlayment provides an additional protective barrier that enhances the roof's overall performance and longevity.

Roofing underlayment has various functions, which include the prevention of water infiltration into the building and thermal insulation of the building. The underlayment also acts as a sound barrier that absorbs and softens the noise from rainfall, hail, or other external disturbances. Roofing underlayment can also increase the roof structure's strength and stability.

In the art, various types of roofing underlayment are used, which have different structure and properties. A common type is bitumen roofing underlayment, which comprises a bitumen layer for insulation and shielding and a support layer for mechanical stability, typically from felt, fiber glass or polyester, which is impregnated with a polymer binder. US2003/203145A1 discloses a conventional roofing underlayment, wherein a support layer is coated with bitumen.

Generally, it is desirable that such roofing underlayment can be prepared and handled conveniently and has high mechanical stability. If roofing underlayment is damaged, for example by holes or cracks, the roof can become unstable, leaky or damaged over long time periods.

There is a general desire that relevant building part have fire-resistant properties. It would thus be desirable to provide also roofing underlayment which is fire-resistant. Typically, conventional roofing underlayment is not fire-resistant. This is a problem, because roofing underlayment which comprise plastic materials, such as plastic fibers and synthetic polymer binder, can burn or melt, and thus can promote flame spreading.

In the art, it has been suggested to increase the resistance of roofing materials against fire by flame-retardant additives or layers.

For example, it has been suggested in the art to include flame-resistant fibers into bituminous membranes. Bituminous membranes are characterized by a fibrous carrier, which is impregnated with molten bitumen. They are prepared in a specific production line in a relatively complicated process, wherein a fabric is unwound from a roll and continuously led through a liquid bitumen bath at a temperature about 200°C. The bituminous membranes have specific structure and properties, and also applications, which are different from standard roofing underlayment.

WO2020/225200A1 relates to bituminous membranes for roofing applications, which are obtained by impregnating fibrous support layers with molten bitumen. The support layer comprises a nonwoven layer based on flame-resistant fibers, which is embedded between first and second nonwovens layer from polyester fibers. The three layer structure and the bitumen impregnation process are relatively complicated. The product is different from standard roofing underlayment.

WO2021/216168A1 relates to roofing composites which comprises a flame resistant (FR) fleece and a carrier impregnated with bitumen. The carrier is typically a glass fiber mat which is impregnated and saturated with molten bitumen. The flame resistant fleece contains a mixture of flame resistant staple fibers and flame-resistant scaffold fibers, and optionally non-flame resistant fibers. Also this preparation method requires impregnation of the carrier with molten bitumen, and the product is different from standard roofing underlayment.

US 2018/0100256 A1 relates to nonwoven flame barriers from blends of silica fibers and different types of oxidized polyacrylonitrile fibers. Such nonwovens from inorganic fibers are relatively rigid. Thus, the nonwovens can be used for preparing products having dimensional stability, such as gypsum wallboards. The nonwovens do not have sufficient elasticity or flexibility for applications such as roofing underlayment.

WO 01/68341 A1 relates to fire combustion modified batts fibers blends from oxidized polyacrylonitrile fibers, carrier fibers and binder fibers. The batts are suitable for various applications, such as covers for furniture or mattresses. Applications for roofing underlayment are not suggested.

It would be desirable to provide a simple and efficient roofing underlayment which has fire barrier properties.

### SUMMARY

The problem underlying the invention is to provide construction materials, especially roofing underlayment with a bitumen layer, and a substrate for such construction materials, which provide an effective fire barrier.

It is a further problem to provide a flame-retardant roofing underlayment and substrate, which can be prepared, handled and used conveniently and have long-term stability on a roof. Therefore, the flame-resistant roofing underlayment and substrate should have mechanical stability, elasticity and flexibility. The material should not be susceptible to damages when being subjected to forces.

The material should be stable at hot temperature, such that it can be coated with molten bitumen and does not deteriorate during long-term use.

It is a further problem to provide such flame-retardant roofing underlayment and substrates which have a simple structure. It is a further problem to provide such materials from components, which are not hazardous and environmentally friendly.

### DETAILED DESCRIPTION

Surprisingly, it was found that the problem underlying the invention is overcome by support layers, products, uses and methods according to the claims. Further embodiments of the invention are outlined throughout the description.

Subject of the invention is a porous support layer for a roofing underlayment, comprising
a first nonwoven layer comprising polyester fibers, and
a second nonwoven layer comprising flame-resistant fibers, wherein the combustion temperature of the flame-resistant fibers is at least 500°C, as determined according to ASTM D 3814, and/or the limiting oxygen index (LOI) of the flame-resistant fibers is at least 25%, as determined according to ISO 4589,
wherein the second nonwoven layer is a surface layer of the support layer, wherein the second nonwoven layer does not comprise inorganic nonwoven fibers,
wherein the support layer is mechanically consolidated.

The support layer comprises a first nonwoven (the "polyester nonwoven") and a second nonwoven (The "flame-resistant nonwoven" or "FR nonwoven", or "surface layer"). The support layer is a composite, because the first and the second nonwoven layer from different materials are combined. The support layer is a laminate, because the first and second nonwoven layer are sheet materials which are connected to each other. The overall support layer is a laminated sheet material. Preferably, it is flexible, such that it can be provided in roll form.

The first and second layer of the support layer are nonwoven layers. According to the general definition in the technical field of ISO 9092:2019, a nonwoven is a sheet of fibers or continuous filaments that has been formed into a web by any means and bonded together by any means with the exception of weaving or knitting. Preferably, the fibers forming the nonwoven are randomly orientated. Preferably, they are bonded by friction, cohesion and/or adhesion. Preferably, the amount of fibers in the nonwoven is at least 60% by weight, more preferably at least 80% by weight.

The support layer is for a construction material, such as a roofing underlayment. The roofing underlayment is prepared by combining the support layer with a bitumen layer, typically on the side of the polyester nonwoven. Thus, the roofing underlayment comprises an outer bitumen layer, an outer fire-resistant layer, and an intermediate polyester layer.

During construction of a roof, the roofing underlayment in sheet form is laid onto a roof surface with the bitumen layer downwards and the fire-resistant layer upwards. For example, the roof surface can be from wood, concrete or metal. Accordingly, the fire-resistant layer is exposed to the exterior, and is thus the "surface layer" of the roofing underlayment and support layer. The flame-resistant layer on the surface can then be covered with further roofing material, such as roof tiles, shingles, panels, or insulation material.

The bitumen layer can be applied by coating the support layer with molten or softened bitumen, or by attaching a pre-formed bitumen layer to the support layer. The bitumen layer can be adhered by softening the bitumen or by an adhesive. Thereby, the roofing underlayment is obtained, which preferably consists of the support layer and a bitumen layer. In these methods, the support layer is neither impregnated nor saturated with the bitumen. Preferably, the bitumen should only enter and fill the pores in regions of the support layer which are close to the surface onto which the bitumen layer is applied. Preferably, the other side of the support layer, i.e. the flame-resistant layer, is a surface layer, and is not coated with bitumen. Preferably, the polyester layer is not in contact with bitumen at all.

The bitumen can be any bitumen-based composition, which is used in the field of roofing materials. The bitumen layer can comprise additives, such as polymers, fillers or functional additives. Bitumen layers which comprise high levels of fillers are also referred to as asphalt, and can also be used for preparing the roofing underlayment of the present invention.

The bitumen layer does not comprise a fibrous or other pre-formed substrate, which has been impregnated and saturated with the bitumen. Specifically, the roofing underlayment is not a bituminous membrane. Further, the inventive roofing underlayment is not a bituminous membrane. The inventive support layer is not impregnated and saturated with bitumen. Conventional bituminous membranes for roofing applications comprise a fibrous substrate, typically a nonwoven or woven fabric, scrim or net, often based on glass fibers, which is fully impregnated and saturated with bitumen, and which shall confer stability to overall bituminous membrane. Such a fibrous substrate within the bitumen is not required in the present invention, because the inventive support layer can confer sufficient stability to the roofing underlayment. This is advantageous, because the inventive roofing underlayment can simply be coated with bitumen, or can be provided with a simple layer from bitumen. In contrast, the impregnation of fibrous substrates with bitumen is carried out in a liquid bitumen bath at about 200°C, and the standard process requires complicated machinery. The simple production process of the inventive roofing underlayment is highly advantageous for large scale applications, in which roofing underlayment is required in high amounts and at moderate costs.

In a preferred embodiment, the support layer is coated with molten or softened bitumen for producing a roofing underlayment.

The support layer is porous. Thus, it does not form a closed film. The porous structure is advantageous, because a bitumen coating can partially enter pores at the surface on which it is applied, thereby increasing the stability of the roofing underlayment. Further, a porous support layer is relatively light, and also permeable which can be advantageous for moisture control and transfer in the roof.

The second nonwoven layer comprising flame-resistant fibers is a surface layer of the support layer. Preferably, there is no other layer between the first nonwoven layer and second nonwoven layer. In this embodiment, both layers are in direct contact with each other. In a preferred embodiment, the support layer does not comprise further layers. Thus, the support layer consists of the first and second nonwoven layer. It was found that a stable and effective support layer for a bitumen layer can be provided from two nonwovens. This is advantageous, because the overall structure is simple. The support layer containing only two nonwoven layers can be prepared conveniently and cost-efficiently, such that the product is suitable for large-scale applications. Simple laminates have a lower tendency to delamination or other problems at layer interfaces. This is advantageous, because roofing materials should remain stable over long time periods under changing environmental conditions, and when mechanical forces are exerted onto a roof during construction and use. Roofing underlayment in the art, even without fire-barrier function, can comprise more layers and different materials, for example polymer films, scrims or glass fiber layers, which render preparation and processing more difficult. The inventive support layer is also much simpler than the three-layer bituminous membrane of WO2020/225200A1, in which a flame-resistant fiber layer is sandwiched between polyester nonwoven layers and fully impregnated and saturated with bitumen.

The support layer can be prepared from distinct nonwoven layers, which are laid onto each other and bonded to each other. Alternatively, precursor webs and/or pre-formed nonwovens can be combined and bonded to each other. The nonwoven layers may comprise regions, in which the fiber materials from adjacent layers penetrate each other. Such a structure can be generated by harsh mechanical consolidation, such as needling, and can connect the adjacent layers more tightly to each other, thereby reducing the risk of delamination. Nonetheless, the first and second nonwovens form different layers, which can be clearly distinguished in cross-sectional view.

It was found that the inventive support layer can provide an efficient fire barrier. The performance of roofing materials to external fire exposure can be determined by standardized tests, for example EN 1187. Moreover, the support layer can confer high stability and further advantageous properties to the roofing underlayment. The support layer is mechanically stable, and thus not susceptible to the formation of holes or cracks, at cold and hot temperature. The advantageous properties are attained by the specific selection and combination of fibers and layers.

The support layer comprises a first nonwoven layer which comprises polyester fibers. In a preferred embodiment, the first nonwoven layer consists of polyester fibers. In a preferred embodiment, the fiber material of the first nonwoven layer is only polyester. The polyester can be selected from polyethylene terephthalate, polybutylene terephthalate and polyester copolymers.

It is highly preferred that the polyester is polyethylene terephthalate (PET). This is advantageous, because PET is stable at temperatures of about 200°C, and PET nonwovens are relatively simple and cost-efficient. Moreover, a PET nonwoven can confer excellent mechanical properties to the support layer, and can support the fire barrier properties. The PET can be virgin PET or recycled PET (rPRT).

In an embodiment, the first nonwoven layer comprises up to 30 wt.%, preferably up 20 wt.% or up to 10 wt.% other fibers, which are not polyester fibers. In a preferred embodiment, the other fibers are flame-resistant fibers. Thereby, the overall fire-barrier performance of the support layer can be further increased.

The second nonwoven layer comprises flame-resistant fibers. According to this disclosure, "flame resistant" refers to a material by which flaming and combustion is slowed, terminated or prevented. The flame-resistant layer confers fire barrier properties to the support layer, and thus to the roofing underlayment. The overall support layer functions as a fire barrier. In the technical field of building materials, this is advantageous for avoiding fire propagation. The fire barrier can prevent or slow down the spreading of flames, or can extinguish a fire.

The support layer comprises a second nonwoven layer which comprises flame-resistant fibers, wherein the combustion temperature of the flame-resistant fibers is at least 500°C and/or the limiting oxygen index (LOI) of the flame-resistant fibers is at least 25%. Preferably, the second nonwoven layer consists of the flame-resistant fibers. It was found that the inventive support layer from a combination of a polyester nonwoven and flame-resistant nonwoven can have excellent flame-resistance, but also mechanical properties which render it highly suitable for roofing underlayment.

The limiting oxygen index (LOI) of the flame-resistant fibers can be at least 25%, preferably at least 27%, or even at least 28%. Preferably, the LOI is in the range of 25% to 45%, especially from 28% to 35%. The LOI is the minimum concentration of oxygen, expressed as a percentage, that will support combustion of a polymer. It is measured by passing a mixture of oxygen and nitrogen over a burning specimen, and reducing the oxygen level until a critical level is reached. LOI values are typically provided in vol% and can be determined by the standardized test of ISO 4589, preferably ISO 4589-1:2017. Such high LOI values are characteristic for highly efficient flame resistant fibers, such as modacrylic fibers which have an LOI of about 29-30%.

The combustion temperature of the flame-resistant fibers can be at least 500°C, more preferably at least 600°C, as determined according to ASTM D 3814, preferably ASTM D3814-06 (Standard Guide for Locating Combustion Test Methods for Polymeric Materials, 1999). Such high combustion temperatures are characteristic for highly efficient flame resistant fibers. Preferably, the combustion temperature of the flame-resistant fibers is at least 600°C and the limiting oxygen index (LOI) is at least 28%.

The flame-resistant fibers are organic fibers. According to the invention, it was found that organic flame-resistant fibers can provide an efficient fiber barrier and advantageous mechanical properties for roofing underlayment. Organic flame-resistant fibers can have an advantageous combination of elasticity, flexibility, and low stiffness, which can be similar to polyester fibers. Thus, the properties of the first and second nonwoven are compatible, such that the support layer can be prepared and handled conveniently. For example, the support layer, and thus also the roofing underlayment, are generally not damaged when processed, i.e. when being rolled, pulled, compressed, bent, or adapted to roof surfaces, nailed, punctured or cut. In contrast, conventional roofing underlayment comprising glass fiber fabrics is neither flexible nor elastic, and can form undesirable cracks and ruptures when such forces are applied.

Preferably, the elongation at break of the support layer at 25°C is at least 10%, more preferably at least 20%. Preferably, the elongation at break of the support layer is between 10% and 60%, especially between 20% and 50%. Tensile properties of the support layer such as elongation at break and tensile strength can be determined by standard test methods, preferably DIN EN ISO 9073-3:2023-09. An elongation at break in such ranges indicates that the support layer has a degree of elasticity and flexibility which is suitable for roofing applications.

Preferably, the softening temperature TG (glass transition temperature) of the flame-resistant fibers is below 150°C, more preferably below 100°C, as preferably determined by DSC, for example according to ASTM E 1356 or 11357. This is advantageous for roofing applications, because such fibers can be flexible at room temperature. Preferably, the flame-resistant fibers have a melting point (TM) of at least 200°C, more preferably at least 220°C. This is advantageous, because the flame-resistant fibers do not melt when a coating is applied from molten or softened bitumen which has a melting point of about 180°C.

It is preferred that the fibers are inherently flame resistant. This means that the flame-retardancy is a property of the fiber material, and is not conferred to the fiber by a fiber coating or functional additives. This is advantageous for roofing applications, in which the material should be stable over long time periods. Flame retardancy can be an inherent property of the fibers or can be imparted to the fibers by a specific treatment, for example by impregnation with a flame-resistant agent.

In a preferred embodiment, the flame-resistant fibers comprise a fiber polymer which comprises at least one element selected from Cl, Br, P, S and Si. Preferably, the fiber polymer comprises moieties selected from phosphate, sulfate, sulfonate, CCln, with n = 1, 2 or 3, or SiOm, with m = 2 or 3, or silicate. Organic flame-resistant fibers, which comprise polymers with such elements and functional groups, are often characterized by a high LOI and can provide an efficient fire-barrier. In case of fire, such polymers are partially decomposed, whereby low molecular weight substances comprising the elements are released in gaseous form, which can dilute the oxygen and extinguish the flame. Preferably, these elements and groups are permanently attached to the fiber polymer. It is highly preferred that these elements and groups are covalently attached to the fiber polymer, such that the fibers are inherently flame-retardant. In this regard, the fiber polymer can be a copolymer from monomers which comprise such elements or groups. For example, modacrylic fibers are prepared from a copolymer from halogenated monomer units. The fiber polymer can also be an organic polymer, which has been functionalized with the functional groups. For example, fire-resistant viscose is a cellulose derivative, wherein the hydroxyl groups are functionalized with phosphorous, sulfate or other groups. Such inherently flame-resistant fibers and fiber polymers are advantageous, because the performance does not deteriorate during long-term use on a roof.

In a preferred embodiment, the flame-resistant fibers are char-forming. This means that the flame-resistant fibers do not melt before pyrolysis. In case of fire, char-forming fibers are pyrolyzed and preserve their basic fibrous structure. Thus, the second nonwoven layer can essentially maintain its structure and integrity and form a fire barrier.

The pyrolysis temperature TP is the temperature at which fibers are carbonized (pyrolyzed). Preferably, the TP of the char-forming fibers is >200°C or >250°C, in other embodiments >300°C, or even >400°C.

Preferably, the melting temperature TM of the flame-resistant fibers is equal, larger, or not significantly lower than the pyrolysis temperature TP. In a preferred embodiment, the flame-resistant fibers are non meltable or the difference TP (pyrolysis temperature) - TM (melting temperature) is less than 50°C, preferably less than 30°C. This is advantageous, because in case of fire, such fibers are not molten, but converted into carbonaceous fibers, and are thus char-forming fibers. Preferably, TM and/or TP are determined according to ASTM D276-00a or ISO/TR 11827:2012(E). For example, the preferred modacrylic fibers are char-forming, having a TM of >240°C and TP of 273°C.

In a preferred embodiment, the flame-resistant fibers are selected from modacrylic, flame-resistant viscose (flame-resistant rayon), polyacrylonitrile (PAN), partially oxidized polyacrylonitrile (PANOX), poly-phenylene benzo-bisoxazole (PBO), polybenzimidazole (PBI) and/or melamine fibers. These fibers have relatively high combustion temperature and LOI and can confer good fire barrier properties to fabrics, but are also compatible with polyester to provide a support layer having advantageous mechanical properties when used as a roofing underlayment.

In a preferred embodiment, the flame-resistant fibers are modacrylic fibers and/or flame-resistant viscose fibers. More preferably, the first nonwoven layer consists of these fibers. Such flame-resistant fibers have excellent flame-resistant properties and can provide efficient fire barriers. They are advantageous, because they are char-forming and can form efficient fire barriers. Moreover, it was found that these fibers have mechanical properties, which are especially advantageous for forming the inventive roofing underlayment in combination with a polyester nonwoven layer. In this regard, the mechanical properties, such as flexibility and elasticity, are similar to PET. Therefore, the overall support layer can be processed and handled conveniently. Such a support layer is very uniform, which reduces damages by delamination or the like, when forces are applied during processing and use.

In a highly preferred embodiment, the fibers are modacrylic fibers. Modacrylic is a modified acrylic fiber co-polymer that is composed of less than 85%, but at least 35% by weight of acrylonitrile monomer. Typical co-monomers are halogenated vinyl or vinylidene monomers, especially vinyl chloride, vinylidene chloride or vinyl bromide. Modacrylic fibers are commercially available, for example from Kaneka, JP, or Fushon Rayva Fiber Ltd., CN. Preferably, the modacrylic fibers can be characterized as described in ASTM D276-00a. Modacrylic fibers are char-forming, i.e. pyrolyzed (carbonized) in the presence of fire. For example, ASTM D276-00a indicates that modacrylic fibers do not melt. Moreover, they can confer advantageous mechanical properties at cold and hot temperature to the support layer. A support layer comprising a second nonwoven layer based on modacrylic fibers can be flexible and have a certain degree of elasticity, but also high mechanical stability at cold and hot temperature. It was found that a nonwoven layer from modacrylic fibers is highly compatible with a polyester nonwoven layer, such that a roofing underlayment with advantageous fire barrier and mechanical properties is obtained.

In a highly preferred embodiment, the fibers are flame-resistant viscose (flame-resistant rayon) fibers. Flame-resistant viscose fibers are prepared in a process in which functional groups such as phosphorous, nitrogen and/or sulfur-containing groups are covalently attached to cellulose. Flame-resistant viscose fibers are commercially available, for example "FR viscose" from Lenzing, DE, or FR lyocell fibers. Preferred are fibers from cellulose modified with sulfur-containing groups, which release SO2 in case of fire. For example, such fibers can be based on sulfonated cellulosed. Flame-resistant viscose fibers can provide an efficient fire barrier and have a high LOI, as they are char-forming and not molten in case of fire. Moreover, fire-resistant viscose fibers can be flexible and elastic. It was found that the properties of a nonwoven layer from flame-resistant viscose are compatible with a polyester nonwoven layer, such that a roofing underlayment with advantageous fire barrier and mechanical properties is obtained.

In an embodiment, the char-forming fibers are partially carbonized (pre-carbonized). Thus, they were prepared from precursor fibers by partial carbonization. Carbonization is a process, in which organic matter is converted at least partially into carbon. Such pre-carbonized fibers can have relatively high melting points or do not melt at all in the presence of fire. To a certain extent, such pre-carbonized fibers can maintain mechanical properties of the polymer precursors, such as flexibility, elasticity and mechanical stability.

In another embodiment, the char-forming fibers were not partially carbonized (pre-carbonized) before preparing the support layer. This can be advantageous, because flame-resistant fibers can become less flexible and elastic during pre-carbonization.

For a strong fire barrier function, it is preferred that the ratio of char-forming fibers in the second nonwoven layer is relatively high. Preferably, the second layer consists of char-forming fibers. Preferably, the second layer consists of fibers which have a combustion temperature of at least 500°C and/or limiting oxygen index (LOI) of at least 25%. In other embodiments, at least 70%, at least 80% or at least 90% (by weight) of all fibers in the second layer are char-forming, and/or have the LOI and/or combustion temperature cited above.

In a preferred embodiment, the first nonwoven layer consists of the polyester fibers and/or the second nonwoven layer consists of the flame-resistant fibers. Such a support layer is advantageous, because it can have excellent properties and has a relatively simple structure.

The second layer does not comprise inorganic nonwoven fibers, such as glass fibers. Preferably, the support layer and/or the first layer do not comprise inorganic fibers, such as glass fibers, for example as nonwoven fibers or other fibers which would form a fabric layer. In these embodiments, the support layer may comprise a reinforcement in the form of glass yarns.

In an embodiment, the second nonwoven and/or the support layer do not comprise stiff and rigid fibers, for example fibers which have an elongation at break of less than 10%, or less than 5%. In an embodiment, the second nonwoven does not comprise aramid fibers, such as meta-aramid, para-aramid and Kevlar fibers. Such fibers are relatively stiff and rigid, and thus the elasticity of the support layer could be decreased.

Preferably, the support layer does not comprise fibers which are molten or softened at 200°C or less, such as polyolefin fibers or copolyester fibers. Preferably, the support layer does not comprise multicomponent fibers, which would render the product more complicated and expensive. However, the first layer may comprise other fibers which are relatively stable at hot temperature, for example polyamide fibers or natural fibers.

The first and second nonwoven can be formed from staple fibers, which have a defined length, or from continuous fibers, preferably as a spunlaid nonwoven. Preferably, all fibers of the support layer are staple fibers. This can be advantageous, because nonwovens from staple fibers can be prepared conveniently and can have advantageous properties. Staple fibers can be processed and laid into a fleece by conventional means such as carding, followed by consolidation. For example, the length of the staple fibers is between 5 mm to 200 mm, preferably between 10 mm to 100 mm.

The support layer is porous. Porosity or void fraction is a measure of the void (i.e. "empty") space in a material, and is a fraction of the volume of voids over the total volume as a percentage between 0% and 100%. Preferably, the void fraction of support layer, before and/or after binder consolidation, is between 60% and 95%, more preferably between 75% and 93%, especially between 80% and 90%. The porosity can be calculated from the weight and density of the product and known densities of the components. Preferably, the average pore diameter is between 50 µm and 300 µm, preferably between 80 µm and 200 µm, as preferably determined by DIN ISO 9073-5:2008. When the support layer is consolidated, the amount of binder is so low that the support layer remains porous.

Preferably, the linear density of the fibers of the first and second nonwoven layer is between 0.5 to 20 dtex, more preferably from 1 to 10 dtex. More preferably, the linear density of the char-forming fibers is in the range of 2 to 7 dtex. It was found that nonwovens from fibers in these diameter ranges can provide appropriate strength and flexibility to the support layer. Moreover, flame-resistant fibers with such fiber diameters can confer excellent flame-resistant properties to the support layers.

The first and second nonwoven layer, or their precursor layers, can be pre-consolidated before being combined, preferably mechanically, more preferably by pre-needling or hydroentangling. The first and second layer, and optionally the reinforcement, are combined and the assembly is consolidated mechanically, and optionally also by other means. Preferably, the laminate is mechanically consolidated by needling and/or hydroentanglement.

According to the invention, it was found that a roofing underlayment which consists of the first and the second nonwoven layer, and optionally inorganic reinforcing fibers, can have highly advantageous properties, especially regarding flame resistance and mechanical properties. Therefore, it is preferred that the support layer does not comprise further layers.

In an embodiment, the support layer may comprise at least one additional layer. An additional layer can be positioned between the first and second nonwoven layer, or on the surface of the first nonwoven layer. An additional layer may confer desired properties to the composite, such as higher strength or a functionality.

In a preferred embodiment, the support layer comprises a reinforcement, preferably an inorganic reinforcement. Preferably, the inorganic reinforcement comprises a plurality of yarns. The inorganic material is preferably glass. However, also another inorganic material can be used, such as silica or mineral fibers. In an embodiment, the reinforcement can be a further layer, for example a nonwoven, woven, net or scrim. The reinforcement can be embedded in the first and/or second nonwoven layer, or can be positioned between the first and second nonwoven layers. In a preferred embodiment, the inorganic reinforcement is positioned between the first and second nonwoven layer. The inorganic reinforcement can increase the overall mechanical stability. Preferably, the amount of reinforcement should not be more than 20% by weight, preferably less than 10% by weight, for example from 1% to 20% by weight, of the support layer.

Preferably, the reinforcement comprises yarns and/or discrete reinforcing fibers. Preferably, the yarns consist of a plurality of twisted fibers (so-called "fiber yarn"). Alternatively, relatively thick discrete reinforcing fibers can be used. Such reinforcing yarns or fibers are discrete in the support layer, because they are not combined to a fabric layer, such as a nonwoven layer. The reinforcing yarns or fibers are preferably glass fiber yarns, but can also be other yarns or fibers, for example from synthetic polymers, such as polyester, or cellulose-based. Glass fiber yarn is advantageous, because it is easily available and suitable for increasing the mechanical strength of nonwovens.

Preferably, the reinforcing yarns or fibers are aligned, preferably in parallel. Aligned means that the yarns or fibers are not laid or arranged randomly. Aligned, especially parallel, yarns or fibers can confer mechanical strength to the support layer in a desired direction. This is advantageous, because the mechanical strength of the support layer can be increased. Preferably, the yarns or fibers are essentially straight. Preferably, the parallel yarns or fibers are aligned in machine direction. This is advantageous, because in a production process such yarns or fibers can be fed from nozzles into the emerging laminate with standard machinery.

In a preferred embodiment, the mechanical consolidation of the support layer is carried out by needle-punching. This is a nonwoven consolidation process in which a preformed fiber web is mechanically entangled with a needle loom by repeated penetration of barbed needles.

In another preferred embodiment, the support layer is mechanically consolidated by hydroentanglement. Thereby, a preformed fiber web is subjected to high pressure fluid jets, typically water jets.

In another preferred embodiment, the support layer is mechanically consolidated by calendering, preferably with a pair of heated rolls. Thereby, the laminate is passed through a pair of heated roles which are pressed against each other, without softening or melting the fibers.

In a preferred embodiment, the support layer is consolidated with a binder. Preferably, the binder is a polymer binder, which comprises a polymer for bonding the nonwoven fibers together. The polymer can be thermoplastic, curable and/or a thermoset. The polymer binder can be a latex binder or molten polymer binder. The polymer binder can be a conventional adhesive for bonding fibers, such as an acrylic, styrene butadiene, styrene acrylic, melamine, polyurethane or silicone binder; a thermoset resin, such as epoxy, polyester, urea formaldehyde, melamine or alkyd resin, a natural binder, such as starch, natural rubber or protein binder, or a flame-resistant binder, such as a halogenated polymer, preferably copolymer of vinyl chloride. It is preferred that the binder is crosslinked (cured) after impregnating the laminate, because crosslinked binders typically have high thermal stability and can be carbonized. Preferably, the curing is mediated by heat, radiation or other means.

Preferably, the polymer binder is selected from styrene-butadiene (SBR) and acrylic binder, such as styrene acrylic. Optionally, the polymer binder comprise a crosslinker, such as melamine formaldehyde. For example, suitable SBR and acrylic binders are available under the trademark Synthomer from BASF, DE. Such binders can be advantageous, because they are easily available, can be applied conveniently, and can confer high strength to the support layer.

In a preferred embodiment, the polymer binder comprises or consists of a halogenated polymer, wherein the halogen is preferably Cl or Br. Preferably, the halogenated polymer is a copolymer of vinyl chloride. As used herein, the term copolymer includes polymers from two or more different monomers, and thus also terpolymers. For example, vinyl chloride terpolymers can be used which are available under the trademark VINNOL from Wacker, DE. Halogenated polymers can be advantageous, because the polymer binder can further increase the fire-resistance of the support layer.

In a preferred embodiment, the polymer binder comprises a mixture of a non-halogenated polymer, such as SBR or acrylic polymer, and a halogenated polymer, such as a copolymer of vinyl chloride.

In another embodiment, the binder polymer comprises starch, for example natural starch, such as potato starch. The starch can comprise amylose and amylopectin, or be 100% amylopectin. The starch can be added in an amount of 0 to 50 wt.% of the binder composition, based on all solids. The use of starch can be advantageous, because it does not melt, but can be char-forming under heat. Further, starch is advantageous, because it can be from natural origin and thus sustainable, and can provide effective mechanical stabilization.

The binder may comprise further conventional components and additives. Preferably, the polymer binder comprises a crosslinker, a catalyst and/or functional additives. Preferably, a crosslinker is added, for example in an amount of 0.1 to 10 wt.% of the binder composition, based on all solids.

In a preferred embodiment, the polymer binder comprises at least one fire-retardant additive. In a preferred embodiment, the fire-retardant additive is a phosphorous compound, such as elementary phosphorous, such as microencapsulated red phosphorous, or a phosphate salt, such as polyphosphate, or an organophosphorous compound. Especially preferred is ammonium polyphosphate (CAS No. 68333-79-9). The flame-retardant additive can be added in an amount of 0 to 40 wt.%, preferably 5 to 30 wt.%, of the binder composition, based on all solids. It was found that a fire-retardant additive, especially a phosphorous compound, can further improve the fire barrier properties of the support layer, without impairing the mechanical properties.

Preferably, the binder composition comprises 60 to 95 wt.% binder polymer, 0 to 15 wt.% catalyst, and 0 to 30 wt.% fire-resistant additives, based on all solids. More preferably, the binder composition comprises 20 to 75 wt.% non-halogenated binder polymer, 20 to 75 wt.% halogenated polymer, 0 to 15 wt.% catalyst, and 0 to 40 wt.%, more preferably 5 to 30 wt.% fire-resistant additives, based on all solids.

Preferably, the binder load (dry weight) on the support layer (without binder) is from 1% to 40%, preferably from 5% to 25%, more preferably from 5% to 20% by weight, based on all solids. The load can be determined by comparing the weight of the support layer before and after binder consolidation.

According to the invention, the second nonwoven layer based on flame-resistant fibers provides an efficient fire barrier to the support layer. Therefore, it is not necessary that additional flame-resistant components or additives are included. Preferably, the support layer does not comprise another fire-resistant layer, such as a glass fiber layer or metal foil, or a flame-resistant fiber-coating (finishing).

In a preferred embodiment, the support layer has a basis weight of 50 g/m² to 500 g/m², more preferably of 100 g/m² to 400 g/m², or of 120 to 250 g/m². In a preferred embodiment, the basis weight of the first and/or second nonwoven layer is between 20 to 250 g/m², more preferably from 50 to 150 g/m². It was found that such support layers and layers can provide an efficient fire barrier in combination with advantageous mechanical properties for roofing underlayment.

Preferably, the thickness of the support layer is between 0.4 mm and 5 mm, more preferably between 0.6 mm and 4 mm, and especially between 0.8 mm and 2.5 mm, as determined according to DIN EN ISO 9073-2, 1997, section 5.1, normal nonwovens.

In a preferred embodiment, the support layer consists of a first nonwoven layer comprising polyester fiber, a second nonwoven layer comprising modacrylic fibers and/or flame-resistant viscose fibers, and an inorganic reinforcement in the form of glass fiber yarns, wherein the support layer is consolidated by needle-punching, is bonded with a polymer binder, and has a basis weight of 50 g/m² to 500 g/m².

In a preferred embodiment, the flame-resistant layer of the support layer, which is a surface layer of the roofing underlayment, is printable and/or comprises an imprint. For example, the imprint can be an advertisement and/or information about the manufacturer. When the roofing underlayment has been laid onto a roof at a construction site, such an imprint can be clearly seen by the public, until it is covered by further roofing material.

Subject of the invention is also a construction material comprising the inventive support layer. Preferably, the construction material is a building material, especially a roofing material. The construction material is a flat material, which is preferably provided in roll form. Typically, the support layer is coated or impregnated with a polymer material, such as bitumen or a synthetic polymer. In an embodiment, the support layer is not impregnated with bitumen.

Subject of the invention is also a roofing underlayment comprising a support layer of the invention and a bitumen layer, which is preferably positioned on the surface of first nonwoven layer comprising polyester fibers. Preferably, the bitumen layer is coated onto a surface of the support layer.

In another embodiment, the construction material comprises the support layer and a synthetic polymer applied thereto. Preferably, the construction material is membrane material, especially membrane roofing; also known as white membrane or non-bituminous membrane. Preferably, the membrane roofing is a single-ply membrane. The synthetic polymer is preferably synthetic rubber, thermoplastic, such as PVC, or modified bitumen. Typically, the support layer is coated or impregnated with the synthetic polymer. In such construction materials, the synthetic polymer forms a continuous layer, which is stabilized by the adjacent or integral support layer. The support layer functions as a carrier for the polymer material. Typically, the construction material is not porous. Preferably, such construction materials are used for shielding, covering and/or waterproofing building parts and surfaces. Thus, the synthetic polymer has a different function than a binder in a porous support layer, which is applied in much lower amounts only for binding the fibers together.

Subject of the invention is also a roof or building comprising a support layer or construction material, especially roofing underlayment, of the invention.

Subject of the invention is also the use of a support layer of the invention for preparing a construction material, especially a roofing underlayment.

Surprisingly, it was found that the support layer of the present invention provides a novel and unique combination of advantageous properties for construction materials, such as roofing underlayment. The support layer has excellent flame-resistant properties. Moreover, the support layer can have mechanical properties, such as high stability, elasticity and flexibility, which are advantageous for preparing and using construction materials such as roofing underlayment.

The support layer also has advantageous mechanical properties at hot temperature. The high mechanical strength at hot temperature is advantageous, because high integrity is required when the underlayment is coated with molten bitumen, but also when the roof is exposed over long time periods to heat, for example in sunlight and hot climate.

Preferably, the support layer passes standard tests for building and roofing materials for fire barrier function. In a preferred embodiment, the support layer passes the roofing test for external fire exposure of EN 1187 (test 1 and/or 2).

The high maximum tensile strength, the elongation at break, and low tensile deformation at hot temperature indicate that the support layer is stable and elastic. The mechanical properties are relevant, because the support layer and roofing underlayment can be processed and used conveniently. Damages such as cracks and ruptures can be prevented, when the material is rolled, bent, pulled, nailed, punctured or compressed. Preferably, the maximum tensile strength of the support layer at 25°C is at least 250 N/5 cm, more preferably at least 300 N/5 cm. Preferably, the elongation at break of the support layer at 25°C is at least 10%, more preferably at least 15%, and especially in the range of 10% to 50%, or 15% to 40%. Accordingly, the roofing underlayment can be mechanically stable, but have a certain degree of elasticity. Unless noted otherwise, these parameters are determined in machine direction, preferably in machine direction and cross-direction. Preferably, tensile deformation and/or maximum tensile strength are determined with a dynamometer with at least 10 or 20 test specimens of 50 mm (CD) x 180 mm (MD) each, a clamping length of 80 mm and take-off speed of 100 mm/min.

Subject of the invention is also a method for preparing a roofing underlayment, comprising the steps of providing a support layer of the invention, and applying a bitumen layer on the surface of the first nonwoven layer comprising polyester fibers.

Subject of the invention is also a method for producing a support layer of the invention, comprising the steps of
(a) providing a first fiber layer comprising polyester fibers, and
(b) providing a second fiber layer comprising flame-resistant fibers, wherein the combustion temperature of the flame-resistant fibers is at least 500°C and/or the limiting oxygen index (LOI) of the flame-resistant fibers is at least 25%,
(c) optionally, providing a reinforcement,
(d) assembling the first and second fiber layer, and optionally the reinforcement, on top of each other, and
(e) mechanically consolidating the laminate.

In step (d), a laminate from the first and second nonwoven layers, and optionally the reinforcement, is provided. Preferably, the components are continuously fed into a single production line and combined, preferably simultaneously. For example, rolls of pre-formed nonwoven sheets can be unwound and continuously fed into the process. In a preferred embodiment, the second nonwoven layer is provided in pre-needled form. It was found that such a pretreatment can provide high stability and an efficient fire barrier. In another embodiment, a nonwoven layer or fibers thereof can be deposited on the surface of another layer, for example in a spunbond process. Preferably, after step (d) the method comprises steps of applying the binder to the laminate and consolidating the binder.

Preferably, the method is continuous. It is preferred that all layers, and if present also the reinforcement, are combined in a single production line. Thereby, the laminate (stack of layers) for subsequent consolidation can be obtained. Preferably, additional consolidation steps are carried out in the same production line, such as mechanical consolidation, binder impregnation and thermal consolidation. The support layer thus obtained is a sheet material, which is preferably provided in roll form.

The support layer, construction materials, roofing underlayment, uses and methods of the invention solve the problem underlying the invention. The invention provides a novel support layer for roofing underlayment, which has excellent fire barrier properties in combination with high mechanical stability at room and hot temperature. Moreover, the composite material can have a desirable level of elasticity and flexibility, which is advantageous for convenient preparation and use of the roofing underlayment, but also for stability of the roof. The composite product can be produced in a relatively simple and efficient process. It is stable and not prone to delamination. The support layer has various advantages compared to conventional support layers based on glass fibers. At first, the mechanical properties are much better, because glass fibers confer undesired stiffness to the material. Further, typical problems for glass fibers, such as irritation, health problems and high manufacturing costs, can be avoided.

### EXAMPLES

### TEST METHODS

Tensile properties of the support layer, such as elongation at break and tensile strength, were determined according to DIN EN ISO 9073-3:2023-09. Mass per unit area was determined according to DIN ISO 9073-1:2023.

Mechanical properties at 180°C were determined by a tensile stress test as described in US2008/0214716 under modified conditions. The heat distortion resistance is characterized by tensile stress experiments with a tearing machine (dynamometer) with integrated thermostated chamber at T = 180°C. For each measurement, 5 test specimens of 50 mm (CD) x 180 mm (MD) each are prepared. The clamping length is 80 mm and the take-off speed is 100 mm/min. The elongation of the specimens is determined at 180°C with increasing tensile force. The elongation determined for the 5 test specimens is stated for defined tensile forces. The dynamometer measured hot tensile deformation in MD at various different loads of 10 N, 30 N, 50 N and 80 N and the maximum tensile strength for each specimen.

Fire spreading was determined in a standard roofing test of EN 1187, method 1. The result in centimeter indicates the diameter of the charring area in cm. The charring area is the approximately circular spot, in which the test specimen has been converted into char. The charring area is characterized by the black/brown color of char. It is not a hole in the specimen.

### EXAMPLES 1 TO 4

### Preparation of support layers

In examples 1 to 3, inventive support layers were produced and the properties were examined. The support layers were prepared from one modacrylic nonwoven layer, one polyester nonwoven layer, and in between the nonwoven layers a reinforcement in the form of parallel glass fiber yarns. The fiber materials and binders are summarized in table 1. The nonwoven layers were pre-consolidated as summarized in table 2. The nonwoven layers were combined in a cross lapper, which is a conventional device for producing nonwoven laminates from precursor materials. Parallel reinforcing glass yarns were introduced from guidance nozzles through which the unwound yarns from bobbins were directed. The nonwoven laminate from the cross lapper was consolidated by needling and thermal treatment, followed by impregnation with a binder and curing. The consolidation steps and conditions are summarized in table 3. All support layers were obtained in the form of flexible sheets, which can be rolled, unrolled and handled conveniently.

In comparative example 4, a support layer was prepared according to example 1, but wherein the modacrylic fiber nonwoven layer was replaced by another polyester nonwoven layer. Nonwoven laminates based on PET fibers are used in the art as roofing underlayment.

**Table 1**

| component | chemical name | count [dtex] | tradename, manufacturer |
|---|---|---|---|
| second layer of flame-resistant fibers | modacrylic | 3.3-6.3 | AKSA, CN |
| | staple fiber | | |
| reinforcement | glass yarn | 680 | fiber E-glass |
| | continuous filament | | Valmiera, LV |
| first polyester layer | recycled PET | 1.7-6.7 | r-PET |
| | staple fiber | | Freudenberg, DE |

**Table 2: pre-treatment of fibers and layers**

| | | | |
|---|---|---|---|
| second layer FR | carding | cross lapper | cross lapped over the pre-made inner layer |
| reinforcing fibers | glass yarns | yarn distance 8 mm | |
| first PET layer | carding | cross lapper | pre-needling thermal treatment 230°C |

**Table 3: Consecutive steps for treatment of laminate from cross lapper**

| mechanical consolidation | needling | total stroke density 80 s/cm2 | RB needles, 6.3 mm distance, 38 gauge |
|---|---|---|---|
| thermal consolidation | thermal treatment | heatset | 180°C |
| impregnation | binder | | dry add-on 20% |
| resin curing | binder | | 200°C |

Three different binders were used for consolidating the laminate. The binder compositions are shown in table 4 and the binder components are shown in table 5.

**Table 4: Binder compositions of examples 1 to 3**

| Ex. | binder | binder polymer [wt.%] | crosslinker [wt.%] | **FR polymer** [wt.%] | FR additive [wt.%] |
|---|---|---|---|---|---|
| 1 | STD | 95 | 5 | 0 | 0 |
| 2 | FR1 | 45 | 5 | 50 | 0 |
| 3 | FR2 | 36 | 4 | 40 | 20 |

**Table 5: Binder components**

| component | compound | type, manufacturer |
|---|---|---|
| binder polymer | SBR resin | Synthomer , BASF, DE |
| crosslinker | formaldehyde-melamine | |
| FR polymer | vinyl chloride terpolymer dispersion | VINNOL, Wacker, DE |
| FR additive | ammonium polyphosphate | CAS No. 68333-79-9, Clariant, DE |

The amounts of binder and basis weights of the layers are summarized in table 6.

**Table 6: Component base weight [g/m²]**

| example | 1 | 2 | 3 | 4 (comp.) |
|---|---|---|---|---|
| outer layer (modacrylic, in ex. 4: PET) | 80 | 80 | 80 | 75 |
| reinforcing fibers | 8 | 8 | 8 | 8 |
| inner layer (PET) | 80 | 80 | 80 | 75 |
| binder STD (dry weight) | 25 | - | - | 20 |
| binder FR1 (dry weight) | - | 22 | - | - |
| binder FR2 (dry weight) | - | - | 24 | - |
| support layer (target dry weight, calculated) | 193 | 190 | 192 | 178 |

The properties of the support layers from examples 1 and 4 were examined in test methods as outlined above. Mechanical properties were examined at 25°C (room temperature) and 180°C. The parameters, conditions and results are summarized in table 7.

**Table 7: Properties of support layers of examples 1 to 4.**

| | °C | direction | unit | ex.1 | ex.2 | ex.3 | ex.4 (comp.) |
|---|---|---|---|---|---|---|---|
| binder | | | | STD | FR1 | FR2 | STD |
| mass per unit area | 25 | MD | g/m² | 201 | 200 | 195 | 175 |
| | 25 | CD | g/m² | 195 | 193 | 202 | 181 |
| maximum tensile strenght | 25 | MD | N/5cm | 408 | 409 | 323 | 364 |
| | 25 | CD | N/5cm | 219 | 221 | 180 | 350 |
| elongation at break | 25 | MD | % | 22.5 | 23.5 | 25.4 | 20.2 |
| | 25 | CD | % | 18.1 | 19.5 | 22.9 | 32.3 |
| hot tensile deformation at 10 N | 180 | MD | % | 0.21 | 0.19 | 0.28 | 0.27 |
| hot tensile deformation at 30N | 180 | MD | | 0.64 | 0.57 | 0.76 | 0.62 |
| hot tensile deformation at 50N | 180 | MD | | / | 1.1 | 1.25 | 0.99 |
| time before hole formation | | | s | no hole | no hole | no hole | 5 |
| fire spread along 60 s flame (charring area) | | | cm | 20 | 8 | 9 | n.d. hole in 5 s |
| dripping flame | | | | partially | no | no | yes |

The results show that the inventive support layer from one polyester nonwoven and one modacrylic nonwoven provides an effective fire barrier. The fire-barrier properties can be improved with a flame-resistant polymer and flame-retardant additive. The mechanical stability at cold and hot temperature is high. The elongation at break indicates that the support layer has a level of elasticity, which is similar to the comparative material from polyester fibers.

### EXAMPLES 5 TO 7

Support layers were prepared as outlined above for examples 1 to 3, but the second nonwoven layer was prepared from flame-resistant viscose staple fibers (3.3 dtex, 60 mm, LOI >25), which are based on cellulose modified with sulfur-containing groups, which release SO₂ in case of fire. The same binders and amounts were used as outlined above for examples 1, 2 and 3. Thus, the standard binder STD is used in example 5, the FR1 binder with the flame-resistant polymer in example 6, and the FR2 binder with the flame-resistant polymer and additive in example 7. The properties of the support layers examined in test methods as outlined above. The parameters, conditions and results are summarized in table 8.

**Table 8: Properties of support layers of examples 4 to 7.**

| | °C | direction | unit | ex. 5 | ex. 6 | ex. 7 | ex. 4 (comp.) |
|---|---|---|---|---|---|---|---|
| binder | | | | STD | FR1 | FR2 | STD |
| mass per unit area | 25 | MD | g/m² | 202 | 198 | 196 | 175 |
| | 25 | CD | g/m² | 196 | 195 | 203 | 181 |
| maximum tensile strenght | 25 | MD | N/5cm | 405 | 410 | 325 | 364 |
| | 25 | CD | N/5cm | 215 | 223 | 184 | 350 |
| elongation at break | 25 | MD | % | 20 | 24 | 26 | 20.2 |
| | 25 | CD | % | 19 | 18.5 | 23.5 | 32.3 |
| hot tensile deformation at 10 N | 180 | MD | % | 0.2 | 0.18 | 0.3 | 0.27 |
| hot tensile deformation at 30N | 180 | MD | | 0.63 | 0.59 | 0.74 | 0.62 |
| hot tensile deformation at 50N | 180 | MD | | / | 1.12 | 1.2 | 0.99 |
| time before hole formation | | | s | no hole | no hole | no hole | 5 |
| fire spread along 60 s flame (charring area) | | | cm | 21 | 7 | 8 | n.d. hole in 5 s |
| dripping flame | | | | partially | no | no | yes |

The results show that the inventive support layer from one polyester nonwoven and one fire-resistant viscose nonwoven provides an effective fire barrier. The fire-barrier properties can be improved with a flame-resistant polymer and flame-retardant additive. The mechanical stability at cold and hot temperature is high. The elongation at break indicates that the support layer has a level of elasticity, which is similar to the comparative material from polyester fibers.

## Claims

1. A porous support layer for roofing underlayment, comprising
a first nonwoven layer comprising polyester fibers, and
a second nonwoven layer comprising organic flame-resistant fibers, wherein the combustion temperature of the flame-resistant fibers is at least 500°C as determined according to ASTM D 3814, and/or the limiting oxygen index (LOI) of the flame-resistant fibers is at least 25% as determined according to ISO 4589, wherein the second nonwoven layer is a surface layer of the support layer, wherein the second nonwoven layer does not comprise inorganic nonwoven fibers,
wherein the support layer is mechanically consolidated, preferably by needle-punching.

2. The support layer according to claim 1, wherein the flame-resistant fibers comprise a fiber polymer which comprises at least one element selected from Cl, Br, P, S and Si.

3. The support layer according to at least one of the preceding claims, wherein the flame-resistant fibers are char-forming.

4. The support layer according to at least one of the preceding claims, wherein the flame-resistant fibers are non meltable or the difference T_{P} (pyrolysis temperature) - T_{M} (melting temperature) is less than 50°C, preferably less than 30°C.

5. The support layer according to at least one of the preceding claims, wherein the flame-resistant fibers are selected from modacrylic, flame-resistant viscose, polyacrylonitrile (PAN), partially oxidized polyacrylonitrile (PANOX), poly-phenylene benzo-bisoxazole (PBO), polybenzimidazole (PBI) and/or melamine fibers, wherein preferably the flame-resistant fibers are modacrylic fibers and/or flame-resistant viscose fibers.

6. The support layer according to at least one of the preceding claims, which does not comprise further layers, and/or
wherein the first nonwoven layer consists of the polyester fibers and/or the second nonwoven layer consists of the flame-resistant fibers, and/or
wherein the support layer has a basis weight of 50 g/m² to 500 g/m².

7. The support layer according to at least one of the preceding claims, which comprises a reinforcement, preferably an inorganic reinforcement, wherein the reinforcement preferably comprises glass fiber yarns, which are preferably aligned in parallel.

8. The support layer according to at least one of the preceding claims, wherein the support layer is consolidated with a polymer binder.

9. The support layer according to claim 8, wherein the polymer binder comprises a halogenated polymer, preferably a copolymer of vinyl chloride, and/or
wherein the polymer binder comprises at least one fire-retardant additive, which is preferably a phosphorous compound.

10. A construction material comprising the support layer of at least one of the preceding claims.

11. The construction material of claim 10 in the form of a roofing underlayment, which comprises a bitumen layer, which is disposed on the support layer on the surface of the first nonwoven layer comprising polyester fibers.

12. A roof or building comprising a construction material according to claim 10 or 11.

13. Use of a support layer according to at least one of claims 1 to 10 for preparing a roofing underlayment.

14. A method for producing a support layer of any of claims 1 to 10, comprising the steps of
(a) providing a first fiber layer comprising polyester fibers, and
(b) providing a second fiber layer comprising the flame-resistant fibers,
(c) optionally, providing a reinforcement,
(d) assembling the first and second fiber layer, and optionally the reinforcement, on top of each other, so as to form a laminate and
(e) mechanically consolidating the laminate.

15. A method for preparing a roofing underlayment, comprising the steps of providing a support layer according to at least one of claims 1 to 10, and applying a bitumen layer on the surface of the first nonwoven layer comprising polyester fibers.

## Patentansprüche

1. Poröse Trägerschicht für Dachunterdecke, umfassend eine erste Vliesschicht, die Polyester-Fasern umfasst, und
eine zweite Vliesschicht, die organische flammhemmende Fasern umfasst, wobei die Verbrennungstemperatur der flammhemmenden Fasern mindestens 500 °C beträgt, wie gemäß ASTM D 3814 bestimmt, und/oder der limitierende Sauerstoffindex (LOI) der flammhemmenden Fasern mindestens 25 % beträgt, wie gemäß ISO 4589 bestimmt, wobei die zweite Vliesschicht eine Oberflächenschicht der Trägerschicht ist, wobei die zweite Vliesschicht keine anorganischen Vliesfasern umfasst,
wobei die Trägerschicht mechanisch konsolidiert ist, vorzugsweise durch Nadelstanzen.

2. Trägerschicht nach Anspruch 1, wobei die flammhemmenden Fasern ein Faserpolymer umfassen, das mindestens ein Element umfasst, ausgewählt aus Cl, Br, P, S und Si.

3. Trägerschicht nach mindestens einem der vorhergehenden Ansprüche, wobei die flammhemmenden Fasern Kohle bildend sind.

4. Trägerschicht nach mindestens einem der vorhergehenden Ansprüche, wobei die flammhemmenden Fasern nicht schmelzbar sind oder die Differenz T_{P} (Pyrolysetemperatur) - T_{M} (Schmelztemperatur) kleiner als 50 °C, vorzugsweise kleiner als 30 °C ist.

5. Trägerschicht nach mindestens einem der vorhergehenden Ansprüche, wobei die flammhemmenden Fasern ausgewählt sind aus Modacryl-, flammhemmenden Viskose-, Polyacrylnitril- (PAN), teilweise oxidierten Polyacrylnitril- (PANOX), Polyphenylenbenzobisoxazol-(PBO), Polybenzimidazol- (PBI) und/oder Melamin-Fasern, wobei die flammhemmenden Fasern vorzugsweise Modacryl-Fasern und/oder flammhemmende Viskose-Fasern sind.

6. Trägerschicht nach mindestens einem der vorhergehenden Ansprüche, die keine weiteren Schichten umfasst, und/oder
wobei die erste Vliesschicht aus den Polyester-Fasern besteht und/oder die zweite Vliesschicht aus den flammhemmenden Fasern besteht und/oder
wobei die Trägerschicht ein Flächengewicht von 50 g/m² bis 500 g/m² aufweist.

7. Trägerschicht nach mindestens einem der vorhergehenden Ansprüche, die eine Verstärkung, vorzugsweise eine anorganische Verstärkung, umfasst, wobei die Verstärkung vorzugsweise Glasfaser-Garne umfasst, die vorzugsweise parallel ausgerichtet sind.

8. Trägerschicht nach mindestens einem der vorhergehenden Ansprüche, wobei die Trägerschicht mit einem Polymer-Bindemittel konsolidiert ist.

9. Trägerschicht nach Anspruch 8, wobei das Polymer-Bindemittel ein halogeniertes Polymer, vorzugsweise ein Copolymer aus Vinylchlorid umfasst und/oder wobei das Polymer-Bindemittel mindestens ein feuerhemmendes Additiv umfasst, das vorzugsweise eine Phosphor-Verbindung ist.

10. Baumaterial, das die Trägerschicht nach mindestens einem der vorhergehenden Ansprüche umfasst.

11. Baumaterial nach Anspruch 10 in der Form einer Dachunterdecke, die eine Bitumen-Schicht umfasst, die auf der Trägerschicht auf der Oberfläche der ersten Vliesschicht angeordnet ist, die Polyester-Fasern umfasst.

12. Dach oder Gebäude, umfassend ein Baumaterial nach Anspruch 10 oder 11.

13. Verwendung einer Trägerschicht nach mindestens einem der Ansprüche 1 bis 10 zum Herstellen einer Dachunterdecke.

14. Verfahren zum Herstellen einer Trägerschicht nach einem der Ansprüche 1 bis 10, umfassend die folgenden Schritte
(a) Bereitstellen einer ersten Faserschicht, die Polyester-Fasern umfasst, und
(b) Bereitstellen einer zweiten Faserschicht, die die flammhemmenden Fasern umfasst,
(c) gegebenenfalls Bereitstellen einer Verstärkung,
(d) Zusammenbauen der ersten und zweiten Faserschicht und gegebenenfalls der Verstärkung aufeinander, um so ein Laminat zu bilden
(e) mechanisches Konsolidieren des Laminats.

15. Verfahren zum Herstellen einer Dachunterdecke, umfassend die Schritte des Bereitstellens einer Trägerschicht nach mindestens einem der Ansprüche 1 bis 10 und des Aufbringens einer Bitumen-Schicht auf die Oberfläche der ersten Vliesschicht, die Polyester-Fasern umfasst.

## Revendications

1. Couche de support poreuse pour sous-couche de toiture, comprenant
une première couche non tissée comprenant des fibres de polyester, et
une seconde couche non tissée comprenant des fibres ignifuges organiques, dans laquelle la température de combustion des fibres ignifuges est d'au moins 500 °C comme déterminée selon la norme ASTM D 3814, et/ou l'indice limite d'oxygène (LOI) des fibres ignifuges est d'au moins 25 % comme déterminé selon la norme ISO 4589, dans laquelle la seconde couche non tissée est une couche superficielle de la couche support, dans laquelle la seconde couche non tissée ne comprend pas de fibres non tissées inorganiques,
dans laquelle la couche de support est consolidée mécaniquement, de préférence par aiguilletage.

2. Couche de support selon la revendication 1, dans laquelle les fibres ignifuges comprennent un polymère fibreux qui comprend au moins un élément choisi parmi Cl, Br, P, S et Si.

3. Couche de support selon au moins l'une des revendications précédentes, **caractérisée en ce que** les fibres ignifuges forment un charbon.

4. Couche de support selon au moins l'une des revendications précédentes, **caractérisée en ce que** les fibres ignifuges sont non fusibles ou **en ce que** la différence T_{P} (température de pyrolyse) - T_{M} (température de fusion) est inférieure à 50 °C, de préférence inférieure à 30 °C.

5. Couche de support selon au moins l'une des revendications précédentes, dans laquelle les fibres ignifuges sont choisies parmi des fibres modacryliques, de viscose ignifuge, de polyacrylonitrile (PAN), de polyacrylonitrile partiellement oxydé (PANOX), de poly-phénylène benzo-bisoxazole (PBO), de polybenzimidazole (PBI) et/ou de mélamine, les fibres ignifuges étant de préférence des fibres modacryliques et/ou des fibres de viscose ignifuges.

6. Couche de support selon au moins l'une des revendications précédentes, qui ne comprend pas d'autres couches, et/ou
dans laquelle la première couche non tissée est constituée des fibres de polyester et/ou la deuxième couche non tissée est constituée des fibres ignifuges, et/ou
dans laquelle la couche de support a un grammage de 50 g/m² à 500 g/m².

7. Couche de support selon au moins l'une des revendications précédentes, qui comprend un renfort, de préférence un renfort inorganique, le renfort comprenant de préférence des fils de fibres de verre, qui sont de préférence alignés parallèlement.

8. Couche de support selon au moins l'une des revendications précédentes, **caractérisée en ce que** la couche de support est consolidée par un liant polymère.

9. Couche de support selon la revendication 8, dans laquelle le liant polymère comprend un polymère halogéné, de préférence un copolymère de chlorure de vinyle, et/ou dans laquelle le liant polymère comprend au moins un additif ignifuge, qui est de préférence un composé du phosphore.

10. Matériau de construction comprenant la couche de support selon au moins l'une des revendications précédentes.

11. Matériau de construction selon la revendication 10, sous la forme d'une sous-couche de toiture, qui comprend une couche de bitume, qui est disposée sur la couche de support sur la surface de la première couche non tissée comprenant des fibres de polyester.

12. Toit ou bâtiment comprenant un matériau de construction selon la revendication 10 ou 11.

13. Utilisation d'une couche de support selon au moins l'une des revendications 1 à 10 pour la préparation d'une sous-couche de toiture.

14. Procédé de production d'une couche de support selon l'une quelconque des revendications 1 à 10, comprenant les étapes de
(a) fourniture d'une première couche de fibres comprenant des fibres de polyester, et
(b) fourniture d'une deuxième couche de fibres comprenant les fibres ignifuges,
(c) éventuellement, fourniture d'un renfort,
(d) assemblage de la première et de la seconde couche de fibres, et éventuellement du renfort, l'un(e) sur l'autre, de manière à former un stratifié et
(e) consolidation mécanique du stratifié.

15. Procédé de préparation d'une sous-couche de toiture, comprenant les étapes de fourniture d'une couche de support selon au moins l'une des revendications 1 à 10, et d'application d'une couche de bitume sur la surface de la première couche non tissée comprenant des fibres de polyester.
